# EUROPÄISCHE PATENTSCHRIFT

(11) **EP 3 392 685 B1**
(45) Veröffentlichungstag und Bekanntmachung des Hinweises auf die Patenterteilung: **03.03.2021**
(21) Anmeldenummer: 18173316.3
(22) Anmeldetag: 19.01.2015
(51) Int. Cl.: G02B 6/00, F21V 8/00, B60Q 1/26, B60R 1/12

(54) **RÜCKBLICKVORRICHTUNG FÜR EIN KRAFTFAHRZEUG**
REAR VIEW DEVICE FOR A MOTOR VEHICLE
RETROVISEUR POUR UN VEHICULE A MOTEUR

(43) Veröffentlichungstag der Anmeldung: 24.10.2018
(62) Teilanmeldung aus: 15151604.4
(73) Patentinhaber: SMR Patents S.à.r.l., 2453 Luxembourg (LU)
(72) Erfinder: Kürschner, Norbert, 70327 Stuttgart (DE); Fritz, Daniel, 70374 Stuttgart (DE)
(74) Vertreter: Weber-Bruls, Dorothée

(56) Entgegenhaltungen:
- EP-A1- 1 970 736
- EP-A1- 2 463 157
- EP-A2- 1 167 870
- WO-A1-01/27529
- DE-U1-202012 100 398
- US-A1- 2013 300 982
- US-A1- 2014 140 084

## Beschreibung

Die Erfindung betrifft eine Rückblickvorrichtung für ein Kraftfahrzeug, umfassend eine Rückblick-Reflexionsfläche, ein oder mehrere Leuchtmittel und eine Lichtleitvorrichtung, wobei das Leuchtmittel und die Lichtleitvorrichtung eine Anzeige eines Totwinkelassistenten bilden, indem die Lichtleitvorrichtung, die Lichtquelle und die Rückblick-Reflexionsfläche so zueinander angeordnet sind, dass das von der Lichtquelle emittierte Licht durch die Lichtleitvorrichtung auf eine vom Fahrer des Fahrzeugs abgewandte Seite der Rückblick-Reflexionsfläche umgelenkt wird, um eine Fläche der Rückblick-Reflexionsfläche für den Fahrer sichtbar zur Bereitstellung des Totwinkelassistenten, zu beleuchten.

Bei bekannten Lichtleitvorrichtungen hat es sich als nachteilig erwiesen, dass das von der Lichtleitvorrichtung umgelenkte Licht verhältnismäßig inhomogen über eine zu beleuchtende Fläche ausgekoppelt wird. Dieser Effekt wird umso deutlicher, je größer die zu beleuchtende Fläche ist und je weiter die zu beleuchtende Fläche von einer Lichtquelle entfernt ist. Wird beispielsweise ein Piktogramm einer Totwinkelanzeige geringer Strichstärke, beispielsweise 0,4 mm, mittels bekannter Lichtleitvorrichtungen hinterleuchtet, kann die Inhomogenität vernachlässigbar sein. Mit zunehmender Strichstärke des Piktogramms, beispielsweise 1,0 mm, wird die Inhomogenität jedoch sehr deutlich sichtbar und von einem Benutzer als störend empfunden. Bei sehr ungleichmäßiger Ausleuchtung eines Piktogramms kann dieses im Extremfall dazu führen, dass eine Warnanzeige vom Benutzer als nicht beleuchtet fehlgedeutet wird.

Eine Leuchte für Fahrzeuge, insbesondere für Kraftfahrzeuge, bestehend aus einem Leuchtengehäuse, das in Abstrahlrichtung von einer Abschlussscheibe begrenzt wird, und mindestens einem länglichen Lichtleitelement, das auf einer Vorderseite eine Lichtaustrittsfläche, auf einer der Vorderseite abgewandten Rückseite eine Reflexionsfläche und an einem ersten Ende eine Lichteinkoppelfläche mit einer vorgelagerten Lichtquelle aufweist, wobei die Lichtaustrittsfläche des Lichtleitelements als Teil der Abschlussscheibe ausgebildet ist, ist aus der EP 1 167 870 A2 bekannt.

Die US 2013/0300982 A1 beschreibt eine Lichtleitplatte in einer planaren Beleuchtungsvorrichtung mit ersten Verbindungsflächen, die jeweils benachbarte Lichtaustrittsflächen verbinden; und zweiten Verbindungsflächen, die jeweils benachbarte gegenüberliegende Flächen verbinden.

Eine Aufgabe eines Ausführungsbeispiels der Erfindung ist, eine Rückblickvorrichtung für ein Kraftfahrzeug mit einer Lichtleitvorrichtung bereitzustellen, bei der eine homogene Lichtverteilung auf einer Lichtauskoppelfläche verbessert ist.

Diese Aufgabe wird durch eine Rückblickvorrichtung mit den Merkmalen des Anspruchs 1 gelöst. Die Ansprüche 2 und 3 beschreiben bevorzugte Ausführungsbeispiele der Erfindung.

Die Lichtleitvorrichtung hat eine Lichteinkoppelseite zum Einkoppeln von Licht einer Lichtquelle in die Lichtleitvorrichtung, eine Reflexionsseite mit einer Reflexionsschicht zur Reflexion des eingekoppelten Lichts, sowie eine Lichtauskoppelseite. Dabei liegt die Lichtauskoppelseite der Reflexionsseite im Wesentlichen gegenüber. Zudem nimmt der Abstand zwischen der Reflexionsseite und der Lichtauskoppelseite mit zunehmendem Abstand von der Lichteinkoppelseite im Wesentlichen ab. Diese Abnahme des Abstandes kann zumindest teilweise nicht-linear verlaufen. Mit anderen Worten kann die Reflexionsseite und/oder die Reflexionsschicht relativ zur Lichtauskoppelseite nicht nur linear geneigt sondern auch bogenförmig bzw. gewölbt verlaufen. Die Reflexionsseite mit der Reflexionsschicht ist so ausgestaltet, dass von der Lichteinkoppelseite kommendes Licht zur Lichtauskoppelseite umgelenkt wird, um so eine gleichmäßigere oder möglichst gleichmäßige Lichtverteilung auf der Lichtauskoppelseite zu erzielen.

Die Lichtleitvorrichtung kann einen Lichtleitkörper umfassen, an dem die Lichteinkoppelseite, die Lichtauskoppelseite und die Reflexionsseite gebildet sind.

Die Lichtleitvorrichtung kann in einer Beleuchtungsvorrichtung eingesetzt werden, um mit einer oder mehreren Lichtquellen mit einer relativ begrenzten Lichtverteilung, beispielsweise LEDs, ein möglichst homogenes Beleuchtungsergebnis über eine gewisse Fläche zu erzielen. Beispielsweise kann die Lichtleitvorrichtung in einer Anzeigevorrichtung eines Kraftraftfahrzeugs eingesetzt werden. Die Anzeigevorrichtung liefert in einer Rückblickvorrichtung einen Totwinkelassistenten. Die Lichtleitvorrichtung kann insbesondere zur möglichst homogenen Beleuchtung bzw. Hinterleuchtung eines Piktogramms des Totwinkelassistenten verwendet werden.

Die Reflexionsschicht kann an der Reflexionsseite angeordnet oder mit dieser einstückig sein. Die Reflexionsschicht kann aus einem anderen Material oder aus dem gleichen Material wie die restliche Lichtleitvorrichtung sein. Bevorzugte Materialien sind Kunststoffe, insbesondere Acrylnitril-Butadien-Styrol (ABS) und/oder Polymethylmethacrylat (PMMA) oder Kunststoffe mit ähnlichen Materialeigenschaften. Beispielsweise sind sowohl die Reflexionsschicht als auch die restliche Lichtleitvorrichtung aus PMMA. Die Lichtleitvorrichtung kann auch ein 2-Komponenten Kunststoffspritzteil sein, wobei die Reflexionsschicht als ABS Platte, beispielsweise weiß oder farbig, gespritzt und anschließend mit transparentem bzw. klarem PMMA die restliche Lichtleitvorrichtung auf der Reflexionsschicht gebildet wird. Die Reflexionsschicht kann auch eine Farb- oder Lackschicht sein, die auf die Reflexionsseite aufgedruckt oder aufgedampft wird.

Die Lichteinkoppelseite und die Lichtauskoppelseite können flächenartig ausgebildet sein und diese Flächen können im Wesentlichen orthogonal oder annähernd orthogonal zueinander angeordnet sein. Die Flächen der Lichteinkoppelseite der Lichtauskoppelseite können Ebenen bilden. Die Oberfläche der Lichteinkoppelseite kann so ausgestaltet bzw. geformt sein, dass von einer Lichtquelle kommendes Licht möglichst vollständig und vorzugsweise möglichst parallel zur Lichtauskoppelseite in die Lichtleitvorrichtung eingekoppelt wird. Dazu kann insbesondere die Lichteinkoppelseite eine oder mehrere Optiken und/oder Ausnehmungen aufweisen, wobei in die Ausnehmungen Lichtquellen zumindest teilweise eingeführt werden können.

Die Lichtleitvorrichtung kann so ausgestaltet sein, dass in die Lichtleitvorrichtung eingekoppeltes und/oder reflektiertes und/oder ausgekoppeltes Licht im Wesentlichen keine Farbänderung erfährt. Dazu kann die Reflexionsschicht aus einem farbneutralen Material, das silberfarben oder weiß ist, sein. Durch Anordnung von einem oder mehreren Farbfiltern an der Lichteinkoppelseite und/oder der Reflexionsseite und/oder der Reflexionsschicht und/oder der Lichtauskoppelseite und/oder innerhalb der Lichtleitvorrichtung kann eine Farbänderung erzielt werden. Das Licht einer Lichtquelle, die weißes Licht emittiert, kann dadurch farbig aus der Lichtleitvorrichtung ausgekoppelt werden, beispielsweise rot oder gelb oder grün. Eine Farbschicht kann eine Temperaturbeständigkeit von ca. -40 °C bis +115 °C aufweisen.

Die Lichtleitvorrichtung kann weiter eine oder mehrere Haltevorrichtungen aufweisen, um die Lichtleitvorrichtung fest oder lösbar an einer Platine zu befestigen.

In einer Beleuchtungsvorrichtung mit einer Lichtleitvorrichtung ist die Lichtquelle relativ zur Lichtleitvorrichtung so angeordnet, dass das von der Lichtquelle emittierte Licht zumindest teilweise an der Lichteinkoppelseite der Lichtleitvorrichtung eingekoppelt wird. Im weiteren Verlauf wird das Licht von der Reflexionsseite und/oder der Reflexionsschicht reflektiert und an der Lichtauskoppelseite ausgekoppelt. Die Beleuchtungsvorrichtung kann in einem Kraftfahrzeug eingesetzt werden, beispielsweise in einer Anzeigevorrichtung einer Rückblickvorrichtung eines Kraftfahrzeugs.

Ein Verfahren zur Herstellung einer Lichtleitvorrichtung, mit mindestens einem der zuvor genannten Merkmale umfasst die Schritte
a) Bereitstellen eines Grundkörpers mit einer Lichteinkoppelseite, einer Reflexionsseite und einer Lichtauskoppelseite, die der Reflexionsseite im Wesentlichen gegenüber liegt; und
b) Anordnen einer Reflexionsschicht an der Reflexionsseite. Die Reflexionsschicht kann mittels Druck, insbesondere Tampon-Druck, Lackierung oder Aufdampfung an dem Grundkörper angeordnet werden, wobei optional Abdeckschablonen verwendet werden können.

Ein alternatives Verfahren zur Herstellung einer Lichtleitvorrichtung umfasst die Schritte
a) Bereitstellen einer Reflexionsschicht aus einem ersten Material; und
b) Anordnen eines Grundkörpers aus einem zweiten Material mit einer Lichteinkoppelseite, einer Reflexionsseite und einer Lichtauskoppelseite, die der Reflexionsseite im Wesentlichen gegenüber liegt, wobei die Reflexionsseite des Grundkörpers an der Reflexionsschicht angeordnet wird.

Eine Rückblickvorrichtung für ein Kraftfahrzeug umfasst eine Rückblick-Reflexionsfläche, ein oder mehrere Leuchtmittel und eine Lichtleitvorrichtung, wobei das Leuchtmittel und die Lichtleitvorrichtung eine Anzeige eines Totwinkelassistenten sein können. Lichtleitvorrichtung, Lichtquelle und Rückblick-Reflexionsfläche sinddabei so zueinander angeordnet werden, dass das von der Lichtquelle emittierte Licht durch die Lichtleitvorrichtung auf eine vom Fahrer des Fahrzeugs abgewandte Seite der Rückblick-Reflexionsfläche umgelenkt wird. So wird eine Fläche der Rückblick-Reflexionsfläche für den Fahrer sichtbar beleuchtet, um einen Totwinkelassistenten bereitzustellen.

Die Rückblick-Reflexionsfläche kann in einem Bereich eine Aussparung oder einen teilreflektierenden Teil umfassen, beispielsweise ein Piktogramm, der durch die Lichtquelle und die Lichtleitvorrichtung für einen Fahrer sichtbar hinterleuchtet wird.

Weitere Merkmale, Einzelheiten und Vorteile der Erfindung ergeben sich aus den beigefügten Zeichnungen und der folgenden Beschreibung, worin bevorzugte Ausführungsformen exemplarisch darstellt werden.

In der Zeichnung zeigt:
- Fig. 1 :: eine Draufsicht eines ersten Ausführungsbeispiels der Lichtleitvorrichtung;
- Fig. 2 :: eine Seitenansicht des Ausführungsbeispiels gemäß Figur 1 ;
- Fig. 3 :: eine Reflexionsseite bzw. Reflexionsschicht mit einer stufenartigen Struktur;
- Fig. 4 :: eine perspektivische Ansicht des Ausführungsbeispiels gemäß Figur 1 ;
- Fig. 5 :: eine perspektivische Ansicht einer Beleuchtungsvorrichtung mit einer Lichtleitvorrichtung mit Fokus auf die Lichteinkopplung;
- Fig. 6 :: eine perspektivische Ansicht einer Beleuchtungsvorrichtung mit einer Lichtleitvorrichtung mit Fokus auf die Lichtauskopplung; und
- Fig. 7 :: eine Explosionsansicht einer Rückblickvorrichtung mit einer Lichtleitvorrichtung.

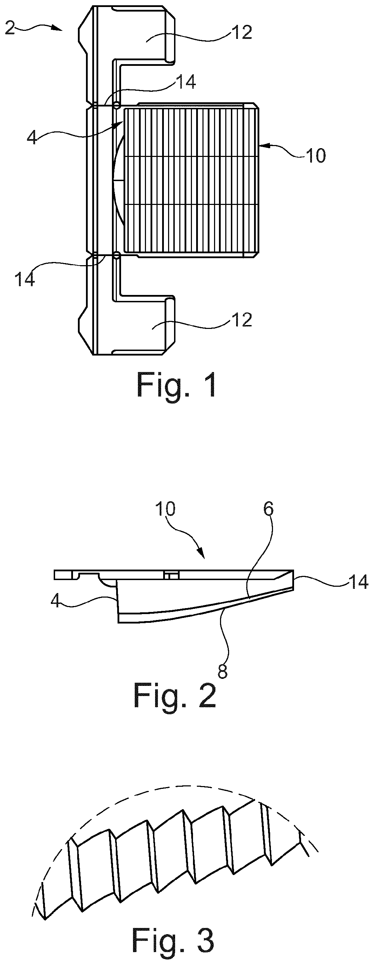

Fig. 1 zeigt eine Draufsicht einer Lichtleitvorrichtung 2 mit einer Lichteinkoppelseite 4, einer Reflexionsseite 6, einer Reflexionsschicht 8 (siehe Fig. 2), sowie einer Lichtauskoppelseite 10. In der Draufsicht der Fig. 1 liegt die Reflexionsseite 6 unter der Lichtauskoppelseite 10 und die Reflexionsschicht 8 liegt unter der Reflexionsseite 6. Die Lichtauskoppelseite 10 liegt der Reflexionsseite 6 und damit auch der Reflexionsschicht 8 gegenüber, so dass reflektiertes Licht möglichst gleichmäßig zur Lichtauskoppelseite 10 gelangt. Der Abstand zwischen der Lichtauskoppelseite 10 und der Reflexionsseite 6 und damit auch der Reflexionsschicht 8 verringert sich mit zunehmendem Abstand von der Lichteinkoppelseite 4. Die Lichtauskoppelseite 10 und die Reflexionsseite 6 können so kontinuierlich zusammenlaufen oder es wird eine Kante 14 gebildet, die auch eine Reflexionsschicht 8 haben kann.

Weiter zeigt Fig. 1 exemplarisch zwei Haltevorrichtungen 12, die sich in der Ebene der Lichtauskoppelseite 10 von der Lichtleitvorrichtung 2 weg erstrecken, die jeweils eine Sollbruchstelle 14 aufweisen. Je nach Einsatz der Lichtleitvorrichtung, beispielsweise in einer rechten oder linken Rückblickvorrichtung eines Kraftfahrzeugs, kann die nicht benötigte Haltevorrichtung 12 abgetrennt, beispielsweise abgebrochen werden.

Fig. 2 zeigt eine Seitenansicht der Lichtleitvorrichtung aus Fig. 1 . Licht kann über die Lichteinkoppelseite 4 in die Lichtleitvorrichtung 2 eintreten, insbesondere im Wesentlichen parallel zur Lichtauskoppelseite 10. Das Licht wird dann über die Reflexionsseite 6 und die Reflexionsschicht 8 in Richtung Lichtauskoppelseite 10 umgelenkt.

Fig. 3 zeigt eine vergrößerte Darstellung einer stufenartig ausgebildeten Reflexionsseite 6 und/oder Reflexionsschicht 8. Eine solche stufenartige Ausbildung, die alternativ oder zusätzlich wellenartig sein kann, kann die Lenkung der von der Lichteinkoppelseite 4 kommenden Lichtstrahlen dahingehend verbessern, dass die Lichtauskopplung von der Lichtauskoppelseite 10 möglichst homogen und über die Lichtauskoppelseite 10 gleichmäßig verteilt ist.

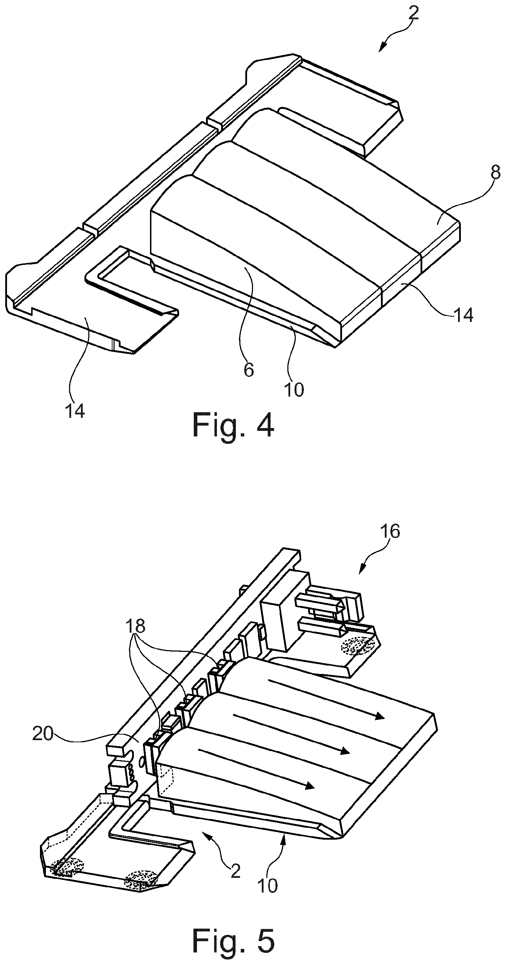

Fig. 4 zeigt die Lichtleitvorrichtung 2 in einer perspektivischen Darstellung. Die für drei Lichtquellen 18 optimierte Lichtleitvorrichtung 2 hat eine mit drei Teiltrichtern ausgebildete Reflexionsseite 6 und Reflexionsschicht 8. Die Längsachse dieser Teiltrichter erstreckt sich entlang der Hauptrichtung des eingekoppelten Lichts. Die Lichtleitvorrichtung 2 kann für jede andere Zahl von Lichtquellen 18 angepasst werden, beispielsweise 1, 2, 3, 4, 5, 6 oder mehr.

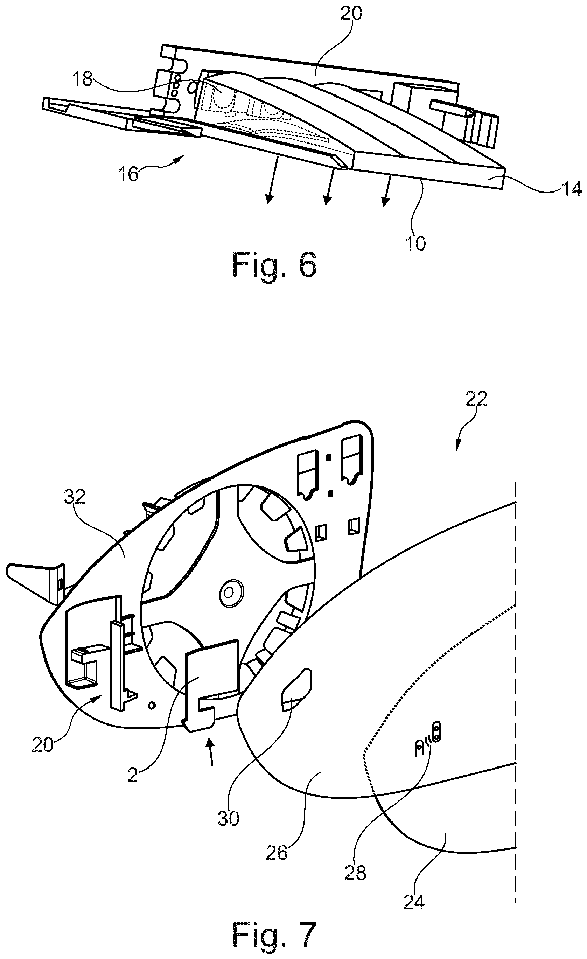

Fig. 5 zeigt eine Beleuchtungsvorrichtung 16 mit drei Lichtquellen 18, die an einer Platine 20 angeordnet sind. Die Platine 20 mit den LED Lichtquellen 18 ist so zur Lichtleitvorrichtung 2 angeordnet, dass das Licht, wie durch die Pfeile dargestellt, im Wesentlichen parallel zur Lichtauskoppelseite 10 emittiert wird. Dabei wird das Licht so durch die Reflexionsseite 6 und insbesondere durch die Reflexionsschicht 8 umgelenkt, dass es, wie aus den Pfeilen in Fig. 6 ersichtlich, die Lichtleitvorrichtung 2 über die Lichtauskoppelseite 10 verlässt.

Fig. 7 zeigt eine Explosionsansicht einer Rückblickvorrichtung 22 mit einer Lichtleitvorrichtung 2, die an einer Platine 20 oder direkt an einer Halterung 32 angeordnet werden kann. Die Rückblickvorrichtung 22 hat weiter eine Rückblick-Reflexionsfläche 24 und eine darunterliegende Heizschicht 26, wobei die Rückblick-Reflexionsfläche 24 ein Piktogramm für eine Totwinkel-Assistenz Anzeige hat, das über die Lichtleitvorrichtung 2 und durch eine Ausnehmung 30 in der Heizschicht 26 beleuchtet werden kann. Platine 20, Lichtleitvorrichtung 2 sowie Rückblick-Reflexionsfläche 24 mit Heizschicht 26 können auf einer Halterung 32 angeordnet werden. Der Klarheit halber werden die restlichen Teile einer Rückblickvorrichtung 22, wie beispielsweise Gehäuse, nicht gezeigt.

### Bezugszeichenliste

2 : Lichtleitvorrichtung
4 : Lichteinkoppelseite
6 : Reflexionsseite
8 : Reflexionsschicht
10 : Lichtauskoppelseite
12 : Haltevorrichtung
14 : Sollbruchstelle
16 : Beleuchtungsvorrichtung
18 : Lichtquelle
20 : Platine
22 : Rückblickvorrichtung
24 : Rückblick-Reflexionsfläche
28 : Piktogramm

## Patentansprüche

1. Rückblickvorrichtung für ein Kraftfahrzeug, umfassend eine Rückblick-Reflexionsfläche, mehrere Lichtquellen (18) und eine Lichtleitvorrichtung, wobei die Lichtquellen (18) und die Lichtleitvorrichtung eine Anzeige eines Totwinkelassistenten bilden, indem die Lichtleitvorrichtung, die Lichtquellen und die Rückblick-Reflexionsfläche so zueinander angeordnet sind, dass das von den Lichtquellen emittierte Licht durch die Lichtleitvorrichtung auf eine vom Fahrer des Fahrzeugs abgewandte Seite der Rückblick-Reflexionsfläche umgelenkt wird, um eine Fläche der Rückblick-Reflexionsfläche für den Fahrer sichtbar zur Bereitstellung des Totwinkelassistenten zu beleuchten,
wobei die Lichtleitvorrichtung (2) mit einer Lichteinkoppelseite (4), einer Reflexionsseite (6), einer Reflexionsschicht (8) sowie einer Lichtauskoppelseite (10) bereitgestellt ist,
wobei Licht über die Lichteinkoppelseite (4) in die Lichtleitvorrichtung (2), im Wesentlichen parallel zur Lichtauskoppelseite (10) eintritt,
wobei das Licht über die Reflexionsseite (6) und die Reflexionsschicht (8) in Richtung Lichtauskoppelseite (10) umgelenkt wird,
wobei in Draufsicht die Reflexionsseite (6) unter der Lichtauskoppelseite (10) und die Reflexionsschicht (8) unter der Reflexionsseite (6) liegt,
wobei die Lichtauskoppelseite (10) der Reflexionsseite (6) und damit auch der Reflexionsschicht (8) gegenüber liegt,
wobei sich der Abstand zwischen der Lichtauskoppelseite (10) und der Reflexionsseite (6) und damit auch der Reflexionsschicht (8) mit zunehmendem Abstand von der Lichteinkoppelseite (4) verringert,
wobei eine für eine gegebene Zahl von Lichtquellen (18) optimierte Lichtleitvorrichtung (2) eine mit Teiltrichtern dieser Zahl ausgebildete Reflexionsseite (6) und Reflexionsschicht (8) hat,
wobei sich die Längsachse dieser Teiltrichter entlang der Hauptrichtung des eingekoppelten Lichts erstreckt und die Zahl 2, 3, 4, 5, 6 oder mehr ist, und
wobei die Lichtauskoppelseite (10) und die Reflexionsseite (6) kontinuierlich zusammenlaufen.

2. Rückblickvorrichtung nach Anspruch 1, **dadurch gekennzeichnet, dass** die Reflexionsseite (6) und/oder die Reflexionsschicht (8) relativ zur Lichtauskoppelseite (10) gewölbt verlaufen.

3. Rückblickvorrichtung nach Anspruch 1 oder 2, **dadurch gekennzeichnet, dass** die Rückblick-Reflexionsfläche in einem Bereich eine Aussparung oder einen teilreflektierenden Teil in Form eines Piktogramms umfasst, das durch die Lichtquellen und die Lichtleitvorrichtung für einen Fahrer sichtbar hinterleuchtet wird.

## Claims

1. A rear view device for a motor vehicle, comprising a rear view reflecting surface, a plurality of light sources (18), and a light guiding device,
wherein the light sources (18) and the light guiding device form a display of a blind spot assistant by the light guiding device, the light sources, and the rear view reflecting surface being arranged relative to each other such that the light which is emitted from the light sources is deflected by the light guiding device to a side of the rear view reflecting surface which faces away from the driver of the vehicle in order to visibly illuminate a surface of the rear view reflecting surface for the driver for providing the blind spot assistant,
wherein the light guiding device (2) is provided with a light coupling side (4), a reflecting side (6), a reflecting layer (8), and a light decoupling side (10),
wherein light enters the light guiding device (2) via the light coupling side (4), substantially in parallel to the light decoupling side (10),
wherein the light is deflected in the direction of the light decoupling side (10) via the reflecting side (6) and the reflecting layer (8),
wherein the reflecting side (6) is under the light decoupling side (10) and the reflecting layer (8) is under the reflecting side (6) in a top view,
wherein the light decoupling side (10) lies opposite the reflecting side (6) and thus also the reflecting layer (8),
wherein the distance between the light decoupling side (10) and the reflecting side (6) and thus also the reflecting layer (8) decreases as the distance from the light coupling side (4) increases, wherein a light guiding device (2) optimized for a given number of light sources (18) has a reflecting side (6) and reflecting layer (8) shaped with said number of partial funnels, wherein the longitudinal axis of said partial funnels extends along the main direction of the coupled light and the number is 2, 3, 4, 5, 6 or more, and
wherein the light decoupling side (10) and the reflecting side (6) are continuously convergent.

2. The rear view device according to claim 1, **characterized in that** the reflecting side (6) and/or the reflecting layer (8) extend arched relative to the light decoupling side (10).

3. The rear view device according to claim 1 or 2, **characterized in that** the rear view reflecting surface comprises, in a region thereof, a recess or a partially reflective part in the shape of a pictogram which is visibly backlit for a driver by the light sources and the light guiding device.

## Revendications

1. Dispositif de rétroviseur pour un véhicule à moteur, comprenant une surface de réflexion de rétroviseur, plusieurs sources de lumière (18) et un dispositif conducteur de lumière, les sources de lumière (18) et le dispositif conducteur de lumière formant un affichage d'un assistant d'angle mort, en ce que le dispositif conducteur de lumière, les sources de lumière et la surface de réflexion de rétroviseur sont agencés les uns par rapport aux autres de telle sorte que la lumière émise par les sources de lumière soit déviée par le dispositif conducteur de lumière sur un côté, opposé au conducteur du véhicule, de la surface de réflexion de rétroviseur, afin d'éclairer une surface de la surface de réflexion de rétroviseur pour la rendre visible pour le conducteur afin de mettre à disposition l'assistant d'angle mort,
le dispositif conducteur de lumière (2) étant doté d'un côté de couplage de lumière (4), d'un côté de réflexion (6), d'une couche de réflexion (8), ainsi que d'un côté de découplage de lumière (10),
la lumière entrant par l'intermédiaire du côté de couplage de lumière (4) dans le dispositif conducteur de lumière (2), essentiellement en parallèle au côté de découplage de lumière (10),
la lumière étant déviée par l'intermédiaire du côté de réflexion (6) et de la couche de réflexion (8) dans la direction du côté de découplage de lumière (10),
en vue de dessus, le côté de réflexion (6) étant situé en dessous du côté de découplage de lumière (10) et la couche de réflexion (8) en dessous du côté de réflexion (6),
le côté de découplage de lumière (10) étant situé en vis-à-vis du côté de réflexion (6) et par conséquent également de la couche de réflexion (8),
la distance entre le côté de découplage de lumière (10) et le côté de réflexion (6) et par conséquent également la couche de réflexion (8) diminuant à une distance croissante du côté de couplage de lumière (4),
un dispositif conducteur de lumière (2) optimisé pour un nombre donné de sources de lumière (18) ayant un côté de réflexion (6) et une couche de réflexion (8) configurés avec des entonnoirs partiels de ce nombre,
l'axe longitudinal de ces entonnoirs partiels s'étendant le long de la direction principale de la lumière couplée et le nombre étant de 2, 3, 4, 5, 6 ou plus, et
le côté de découplage de lumière (10) et le côté de réflexion (6) convergeant continuellement.

2. Dispositif de rétroviseur selon la revendication 1, **caractérisé en ce que** le côté de réflexion (6) et/ou la couche de réflexion (8) sont bombés par rapport au côté de découplage de lumière (10).

3. Dispositif de rétroviseur selon la revendication 1 ou 2, **caractérisé en ce que** la surface de réflexion de rétroviseur comprend dans une zone un évidement ou une partie partiellement réfléchissante sous la forme d'un pictogramme, qui est rétroéclairé par les sources de lumière et le dispositif conducteur de lumière pour être visible pour un conducteur.
